# EUROPEAN PATENT SPECIFICATION

(11) **EP 4 613 236 B1**
(45) Date of publication and mention of the grant of the patent: **11.11.2026**
(21) Application number: 24382238.4
(22) Date of filing: 05.03.2024
(51) Int. Cl.: A61C 8/00, A61C 13/34

(54) **TOOL FOR INSERTION AND POSITIONING OF A DIGITAL REPLICA OF A DENTAL IMPLANT IN AN ORAL MODEL**
WERKZEUG ZUM EINSETZEN UND POSITIONIEREN EINER DIGITALEN REPLIK EINES ZAHNIMPLANTATS IN EINEM ORALEN MODELL
OUTIL POUR L'INSERTION ET LE POSITIONNEMENT D'UNE RÉPLIQUE NUMÉRIQUE D'UN IMPLANT DENTAIRE DANS UN MODÈLE BUCCAL

(43) Date of publication of application: 10.09.2025
(73) Proprietor: Tech Xika P.T.T, S.L., 25005 Lleida (ES)
(72) Inventor: Carrero Villarroel, Xavier, 25005 Lleida (ES)
(74) Representative: Carlos Hernando, Borja

(56) References cited:
- US-A1- 2014 099 602

## Description

### OBJECT OF THE INVENTION

The present invention, a tool for insertion and positioning of a digital replica of a dental implant in an oral model, relates to a tool used to insert a digital replica of a dental implant in an oral model and position the replica in said model. This tool facilitates the method for insertion and positioning of a digital replica of a dental implant in an oral model in the laboratory. The tool has a long, threaded inner shaft at the end for coupling to the replica, allowing same to be held, and a short outer sleeve that moves over a thread on the long shaft to ensure the correct positioning of the replica, as it allows the elimination of the space between the replica and the hole in the oral model intended for the housing of the replica itself.

The field of application of the present invention corresponds with the sector of the industry dedicated to the manufacture of medical instruments, focusing particularly on the field of dentistry, and more specifically on the manufacture of tools for the positioning of implant replicas in laboratory simulations.

### BACKGROUND OF THE INVENTION

As is known, in the field of dental implantology, it is common to use implant replicas, referred to as digital replicas if the records are obtained by a digital working process and analog replicas if the records are obtained by a traditional analog process. From this information all the necessary information is obtained in the dental clinic, such as, for example, the upper or lower jaw set or both with the position of teeth and implants, or a small section of one of the maxillary bones, depending on the case.

This replica is a precise recreation of an implant in reference to the connection and internal thread of the dental implant. These digital or analog replicas are used in a laboratory oral model, obtained mainly by milling, molding or 3D printing. The present invention is intended only for digital replicas that are used in oral models obtained through a process with digital technology, such as digital scanning and computer-aided design (CAD), after which the oral model is finally 3D printed or milled.

In that sense, this type of digital replica is used to replicate the position and orientation of implants in an oral model that reproduces the mouth of the patient. This oral model intervenes and is an essential part, throughout the entire process of manufacture, adjustment, and validation of the dental prosthesis, until obtaining the definitive dental prosthesis. To replicate the position and orientation of the digital replica in the oral model, it is necessary to correctly insert said digital replica in said oral model. Currently, the digital replica is inserted in the oral model, namely in a housing made therein, applying pressure from top to bottom until the replica fits in said hole or gap in the oral model. The fact of exerting pressure on the digital replica can cause damage on the surface thereof, especially when the pressure to be exerted is high due to imprecisions existing in the oral model derived from the process of printing said model, which can force the insertion of the replica, overcoming high friction.

US 2014/099602 A1 discloses a tool for insertion and positioning of a digital replica of a dental implant in an oral model, comprising an inner cylindrical shaft, with a proximal end and a distal end, opposite the former, said distal end comprising a first segment with connection means for the coupling of the replica therein, and a coaxial sleeve external to the inner cylindrical shaft, having a smaller length than the latter.

The objective of the present invention is, therefore, the development of a tool intended to allow and facilitate the insertion and precise and safe positioning of a digital replica in an oral model manufactured in a laboratory, for the purpose of facilitating and ensuring that the replica is correctly placed while at the same time it prevents the replica from being damaged in its most important area, which is in the simulated connection with the dental prosthesis, since this area intervenes in the validation and in the adjustment of the definitive prosthesis.

### DESCRIPTION OF THE INVENTION

The first object of the present invention relates to a tool for insertion and positioning of a digital replica of a dental implant in an oral model according to claim 1, i.e., a dental tool specially designed to be used in the insertion and positioning of a three-dimensional digital replica of a dental implant in an oral model in a laboratory, facilitating said task and ensuring the correct positioning of the replica in the model.

To that end, the tool essentially comprises:
- an inner cylindrical shaft, with a proximal end and a distal end, opposite the former, said distal end comprising a first segment with connection means for the coupling of the replica therein, and said shaft comprising a second threaded segment between the proximal end and the first segment; and
- a coaxial sleeve external to the inner cylindrical shaft, having a smaller length than the latter, with an inner threading complementary to the second threaded segment of the shaft, said sleeve moving with respect to said second threaded segment of the shaft.

Preferably, the sleeve of the tool comprises an upper portion, close to the proximal end of the shaft, and a lower portion, close to the distal end, with the lower portion having a larger diameter than the upper portion, thus facilitating holding the sleeve to perform the threading movement with the shaft, allowing the movement of said sleeve with respect to the shaft.

Also preferably, the proximal end of the shaft has an operating thickening to work as a handle. More preferably, the operating thickening has at least two preferably planar faces, although they could have another configuration that facilitates the holding thereof by the hand of a user or a tool.

Therefore, the inner cylindrical shaft is longer than the external coaxial sleeve, having at its proximal end the thickening that serves as an operating element, whereas at the opposite distal end it has a threaded segment in which the digital replica to be placed in the oral model and allows pulling on same to place it in the hole or gap provided in the oral model is coupled. Furthermore, the external coaxial sleeve, having a smaller length than the inner cylindrical shaft, moves along said shaft between a lower, lowered, or descended position, which abuts with the operating thickening, and an upper or raised position which abuts with the digital replica. This movement is made as a result of the threaded area of the shaft and to the complementary threading of the inside of the sleeve, such that said sleeve, in its raised position with respect to the shaft, can be interlocked in a housing provided for that purpose in the lower part of the oral model and ensure the correct positioning of the digital replica compressing the space between same and the lower base of the oral model.

Preferably, the lower portion of the external sleeve has a larger diameter and a polygonal surface to facilitate holding the sleeve and being able to perform the threading movement that allows the sliding thereof over the shaft.

The oral model reproduces the upper and/or lower mandible of a patient including a reproduction of the teeth and gums. In the position where the digital replica should be located, the oral model has an upper housing, which will receive the digital replica, and a lower housing, which will receive the head of a screw which will hold said digital replica in place. Both housings are communicated with one another by a through hole or gap. Likewise, the upper housing, arranged on the upper side of the oral model, comprises an upper support base, and the lower housing, arranged on the lower side of the oral model, comprises a lower support base. The upper housing will accommodate the digital replica, with the replica being supported on the upper support base and the lower housing will accommodate the head of a screw which will be supported on the lower support base. The digital replica is thereby fixed in the oral model when screwing in the screw, which goes through the through hole or gap, from the lower side of the oral model, to the digital replica located on the upper side of said oral model.

Preferably, the upper and lower support bases of the upper and lower housings, respectively, are flat. Likewise, the upper housing of the oral model has at least one flat wall which will coincide with the at least one flat surface of the digital replica to assure the correct positioning of the replica in said upper housing.

Upper side of the oral model is understood to mean the side where the teeth are located, regardless of the fact that the mandible is the top or bottom of the mouth of a patient.

The use of the tool object of the present invention for the positioning of a digital replica in an oral model requires the following steps:
- Inserting through the lower side of the oral model of the distal end of the shaft of the tool, going through said model through the lower housing and the through hole, until reaching the upper side of the oral model.
- Placing the digital replica at the distal end of the shaft by means of threading, rotating the shaft in a first rotation direction from the thickening or handle at the proximal end.
- Pulling down on the proximal end of the shaft, causing the digital replica to enter the upper housing of the oral model.
- Moving the sleeve from a lower position located close to the thickening or handle of the shaft to an upper position close to the distal end of said shaft. Said movement is performed by means of the complementary thread arranged on the shaft and the inside of the sleeve and rotating said sleeve in the first rotation direction. The sleeve moves until the upper or distal end thereof contacts the lower base of the lower housing. The lower support base is preferably flat to receive the head of the screw which will be supported on said base.
- Continuing with the rotation of the sleeve with respect to the shaft such that the handle of the shaft separates from the distal or lower end of the sleeve, and therefore causing the digital replica to enter the upper housing until the digital replica contacts the upper support base.
- Uncoupling the distal end of the shaft from the replica fitted in the upper housing by means of rotation, in the direction opposite the coupling direction, in the second rotation direction of the shaft through the handle or thickening thereof, to unscrew both elements.
- Separating the sleeve from the lower housing by pulling on the tool.
- Inserting the fastening screw in the lower housing and screwing same in the digital replica.

This tool avoids forcing the insertion of the digital replica by exerting pressure from the upper part of the replica, which could damage one of its essential surfaces for the subsequent planning of the positioning of the dental prosthesis.

### DESCRIPTION OF THE DRAWINGS

To complete the description of the invention and for the purpose of facilitating understanding thereof, a set of figures is included in the present specification in an illustrative and non-limiting manner.

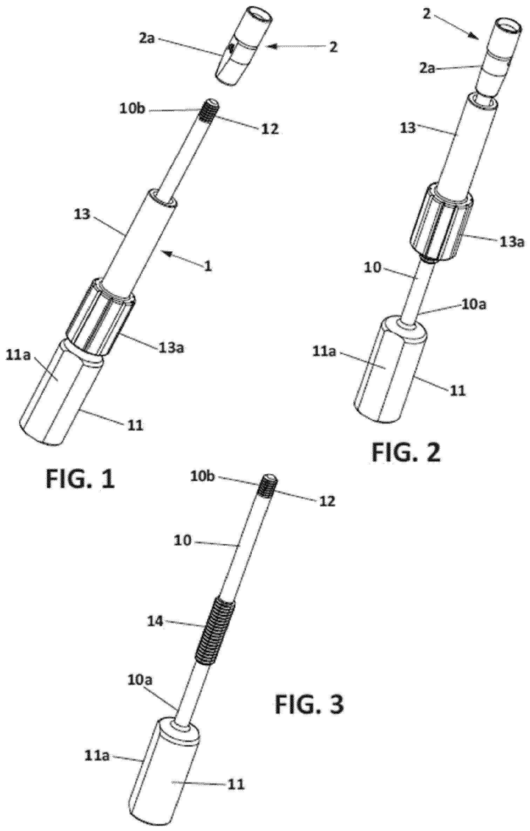

Figures 1 and 2 show respective perspective views of an example of the tool object of the invention depicted, respectively, with the digital replica for which it is intended without coupling to the long inner shaft and with the short outer sleeve in the lowered position, and once coupled to said replica and with the short sleeve in the raised position, where the external configuration of the main parts thereof can be seen.
Figure 3 shows a perspective view of the tool of the invention shown in the preceding figures, in this case depicted without the short outer sleeve, such that the thread of the central part of the long inner shaft can be seen.
Figures 4-A, 4-B, 4-C, 4-D, 4-E, and 4-F show respective section views of the successive phases of the mode of use of the tool in an oral model.
Figure 5 shows a view of the digital replica arranged in the oral model with a screw.

### PREFERRED EMBODIMENT OF THE INVENTION

In that sense, as can be seen in said figures, the tool (1) of the invention for the insertion and correct positioning of a digital replica (2) of a dental implant in an oral model (3) essentially comprises:
- an inner cylindrical shaft (10), with a proximal end (10a) and a distal end (10b), opposite the former, said distal end (10b) comprising a first segment (12) with connection means for the coupling of the replica (2) therein, and said shaft (10) comprising a second threaded segment (14) between the proximal end (10a) and the first segment (12); and
- a coaxial sleeve (13) external to the inner cylindrical shaft (10), having a smaller length than the latter, with an inner threading complementary to the second threaded segment (10a) of the shaft, said sleeve (13) moving with respect to said second threaded segment (14) of the shaft (10).

The oral model (3) has an upper housing (3a) and a lower housing (3b) communicated with one another through a through hole or gap. The digital replica (2) will be placed in the upper housing (3a) and once the digital replica (2) is arranged in the upper housing (3a), a screw will be inserted in the lower housing (3b) to fix the position of said replica (2) in the oral model (3),

The tool (1) object of the present invention is used for this correct positioning of the digital replica (2) in the oral model (3).

To that end, the inner cylindrical shaft (10), has a thickening or handle (11) at its proximal end (10a) to facilitate the operation of the tool (1) and particularly of said shaft (11). On the side opposite the former, i.e., the distal end (10b), the shaft (10) has a first threaded segment (12) suitable for the coupling of the digital replica (2) therein. Once the shaft (10) is threaded into the replica (2), the shaft (10) can be pulled on to partially insert the replica (2) in the upper housing (3a) of the oral model (3).

The external coaxial sleeve (13) can be moved between the proximal end (10a) and the distal end (10b) of the shaft (10) as a result of the second threaded segment (14) provided in the shaft (10) and the complementary threading inner of the sleeve (13).

In that sense, with the sleeve (13) in the lowered or descended position with respect to the length of the shaft (10), the shaft (10) can be inserted through the lower part of the oral model (3), specifically through the lower housing (3b) and crossing the through hole until reaching the upper housing (3a) and reaching the upper side of the model (3).

The digital replica (2) is subsequently coupled, by means of threading, to the first threaded segment (12) of the shaft (10), and the shaft is pulled on to place the digital replica (2) in the upper housing (3a) in the correct position. For the correct positioning of the replica (2) in the upper housing (3a), the replica preferably has at least one flat surface (2a) that coincides with a flat wall of the upper housing (3a).

Once the replica (2) is partially inserted in said upper housing (3a), the sleeve (13) is raised up along the thread (14) of the shaft (10) until the upper end of said sleeve (13) is inserted in the lower housing (3b) of the oral model (3), namely until said upper end is supported on the lower base of said lower housing (3b).

To completely insert the replica (2) into the upper housing (3a) of the oral model (3), it is necessary to continue pulling down on the replica (2), and to that end, keeping the sleeve (13) in the lower housing (3b), the shaft (10) starts to rotate from its handle or thickening (11) for said shaft (10) to descend when the second threaded segment (14) moves with respect to the complementary internal thread of the sleeve (13). This threading action is performed until the replica (2) is located in the upper housing (3a), compressing the space between the upper housing (3a) and the lower housing (3b).

The first segment (12) of the shaft (10) is subsequently unscrewed from the digital replica (2) and with the digital replica (2) in its position inside the upper housing (3a), a screw is inserted through the lower housing (3b) to fix the digital replica (2) in the oral model (3).

Preferably, the sleeve (13) has a lower portion (13a) having a larger mayor diameter that has a polygonal surface with flat faces, to facilitate holding same and perform the threading movement with the shaft (12).

Furthermore, the operating thickening or handle (11) of the shaft (10) of the tool (1) also has at least two flat faces (11a) to facilitate holding same.

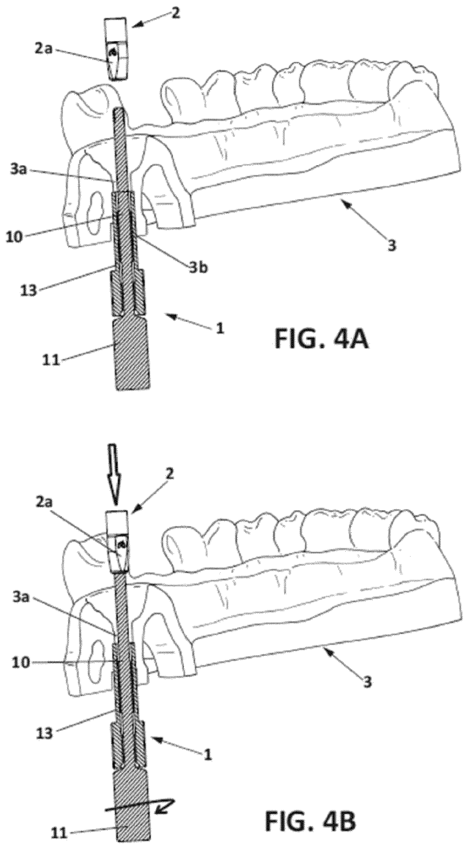

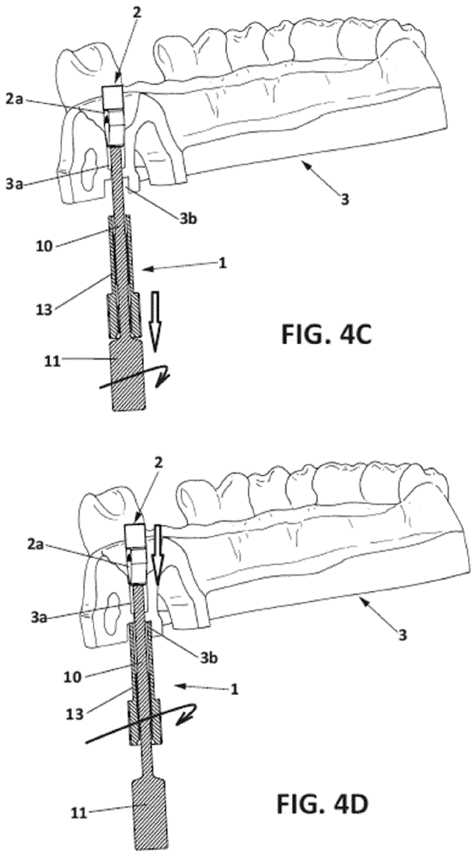

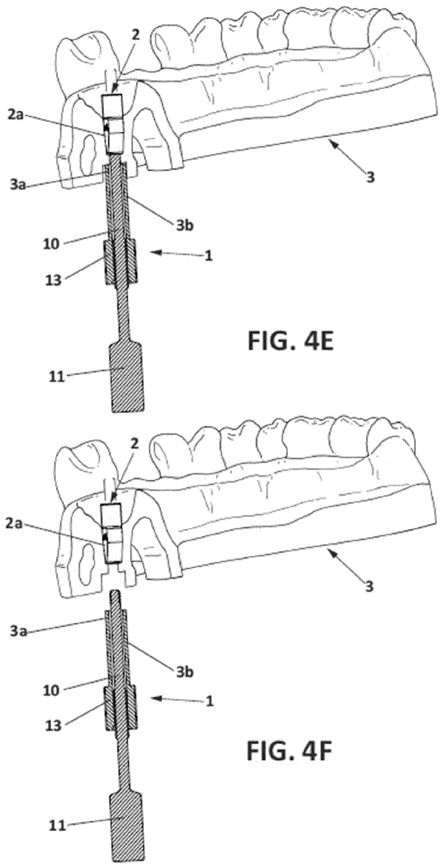

The successive phases of the mode of use of the tool (1) of the invention are schematically observed in Figures 4-A to 4F, which phases essentially comprise the following:
- Firstly, the tool (1) is inserted through the lower housing (3b) of the lower part of the oral model (3) going through said model (3) up to the upper housing (3a) through the through hole joining both housings, such that the first threaded segment (12) of the shaft (10) protrudes through the upper side of the oral model (3), keeping the sleeve (13) in the lower or lowered position, i.e., with its lower portion or end (13a) close to or in contact with the handle (11) of the shaft (10). (Figure 4-A).
- Next, the replica (2) is threaded on the first threaded segment (12) of the shaft (10) by rotating the tool (1) from the operating thickening or handle (11) in a first rotation direction (Figure 4-B).
- Then, the tool (1) is pulled downwards to place the replica (2) in the upper housing (3a) of the model (3), taking into account that the face flat (2a) coincides with the flat wall of said upper housing (3a) (Figure 4-C).
- Next, the sleeve (13) is moved towards the raised position, rotating it in the first rotation direction such that its inner thread moves over the second threaded segment (14) of the shaft (10) and is inserted in the lower housing (3b) of the lower part of the model (3) (Figure 4-D).
- Next, the shaft (10) is rotated again in the first rotation direction to descend with respect to the sleeve (13), causing the digital replica (2) to be inserted completely in the upper housing (3a), compressing the space between the upper housing (3a) and the lower housing (3b) (Figure 4-E).
- Finally, the first segment (12) of the shaft (10) is unscrewed from the digital replica (2) by rotating the shaft (10) in a second rotation direction, opposite the first, from the operating handle (11) (Figure 4-F). The tool (1) is thereby detached from the oral model (3) and from the replica (2), keeping the latter perfectly positioned and oriented in the oral model (3).

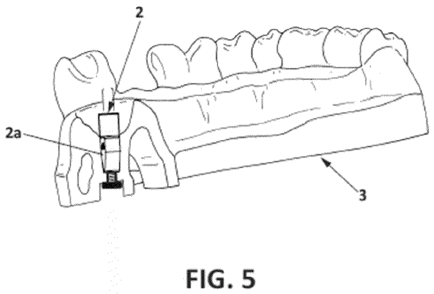

Figure 5 shows the oral model (3) with the digital replica (2) in the correct position in the upper housing (3a) and fixed to said model (3) by means of a screw inserted in the lower housing (3b).

## Claims

1. A tool for insertion and positioning of a digital replica of a dental implant (2) in an oral model (3), comprising:
- an inner cylindrical shaft (10), with a proximal end (10a) and a distal end (10b), opposite the former, said distal end (10b) comprising a first segment (12) with connection means for the coupling of the replica (2) therein, and said shaft (10) comprising a second threaded segment (14) between the proximal end (10a) and the first segment (12); and
- a coaxial sleeve (13) external to the inner cylindrical shaft (10), having a smaller length than the latter, with an inner threading complementary to the second threaded segment (10a) of the shaft, said sleeve (13) moving with respect to said second threaded segment (14) of the shaft (10).

2. The tool according to claim 1, **characterized in that** the sleeve (13) comprises an upper portion, close to the proximal end (10a) of the shaft (10), and a lower portion (13a), close to the distal end (10b), having a larger diameter than the upper portion, to facilitate holding same and perform the threading movement with the shaft (12) which allows it to move with respect to the shaft (10).

3. The tool according to claim 1, **characterized in that** the proximal end (10a) of the shaft (10) has an operating thickening (11) as a handle.

4. The tool according to claim 3, **characterized in that** the operating thickening (11) has at least two faces (11a) to facilitate holding same.

## Patentansprüche

1. Werkzeug zum Einsetzen und Positionieren einer digitalen Nachbildung eines Zahnimplantats (2) in ein Mundmodell (3), umfassend:
- einen inneren zylindrischen Schaft (10) mit einem proximalen Ende (10a) und einem diesem gegenüberliegenden distalen Ende (10b), wobei das distale Ende (10b) ein erstes Segment (12) mit Verbindungsmitteln zum Koppeln der Nachbildung (2) darin umfasst, und der Schaft (10) ein zweites mit einem Gewinde versehenes Segment (14) zwischen dem proximalen Ende (10a) und dem ersten Segment (12) umfasst; und
- eine koaxiale Hülse (13) außerhalb des inneren zylindrischen Schafts (10), mit einer geringeren Länge als dieser, mit einem Innengewinde, das zum zweiten mit einem Gewinde versehenen Segment (10a) des Schafts komplementär ist, wobei sich die Hülse (13) in Bezug auf das zweite Gewindesegment (14) des Schafts (10) bewegen lässt.

2. Werkzeug nach Anspruch 1, **dadurch gekennzeichnet, dass** die Hülse (13) einen oberen Abschnitt nahe dem proximalen Ende (10a) des Schafts (10) und einen unteren Abschnitt (13a) nahe dem distalen Ende (10b) umfasst, mit einem größeren Durchmesser als der obere Abschnitt, um das Halten davon zu erleichtern und die Gewindebewegung mit dem Schaft (12) durchzuführen, wodurch eine Bewegung in Bezug auf den Schaft (10) ermöglicht wird.

3. Werkzeug nach Anspruch 1, **dadurch gekennzeichnet, dass** das proximale Ende (10a) des Schafts (10) eine Bedienungsverbreiterung (11) als Griff aufweist.

4. Werkzeug nach Anspruch 3, **dadurch gekennzeichnet, dass** die Bedienungsverbreiterung (11) mindestens zwei Flächen (11a) aufweist, um das Halten davon zu erleichtern.

## Revendications

1. Outil d'insertion et de positionnement d'une réplique numérique d'un implant dentaire (2) dans un modèle buccal (3), comprenant :
- une tige cylindrique intérieure (10), avec une extrémité proximale (10a) et une extrémité distale (10b), opposée à la première, ladite extrémité distale (10b) comprenant un premier segment (12) avec des moyens de connexion pour y accoupler la réplique (2), et ladite tige (10) comprenant un deuxième segment fileté (14) entre l'extrémité proximale (10a) et le premier segment (12) ; et
- un manchon coaxial (13) extérieur à la tige cylindrique intérieure (10), de longueur inférieure à celle de cette dernière, avec un filetage intérieur complémentaire du deuxième segment fileté (10a) de la tige, ledit manchon (13) se déplaçant par rapport audit deuxième segment fileté (14) de la tige (10).

2. Outil selon la revendication 1, **caractérisé en ce que** le manchon (13) comprend une partie supérieure, proche de l'extrémité proximale (10a) de la tige (10), et une partie inférieure (13a), proche de l'extrémité distale (10b), présentant un diamètre supérieur à celui de la partie supérieure, pour en faciliter la préhension et effectuer le mouvement de vissage avec la tige (12) qui lui permet de se déplacer par rapport à la tige (10).

3. Outil selon la revendication 1, **caractérisé en ce que** l'extrémité proximale (10a) de la tige (10) présente un renflement de manœuvre (11) servant de poignée.

4. Outil selon la revendication 3, **caractérisé en ce que** le renflement de manœuvre (11) présente au moins deux faces (11a) pour en faciliter la préhension.
